# EUROPEAN PATENT APPLICATION

(11) **EP 2 174 844 A1**
(43) Date of publication of application: **14.04.2010**
(21) Application number: 08017635.7
(22) Date of filing: 08.10.2008
(51) Int. Cl.: B60R 21/237

(54) **Method and device for placing an airbag in a protective sheath**

(71) Applicant: TRW Automotive GmbH, 73553 Alfdorf (DE); TRW Polska Sp.z.o.o., 42-200 Czestochowa (PL)
(72) Inventor: Sitek, Krzysztof, 42-200 Czestochowa (PL); Lara, Wlodzimierz, 42-200 Czestochowa (PL); Norberciak Tomasz, 42-200 Czestochowa (PL); Bednarek Adam, 42-200 Czestochowa (PL); Zagorowski Maciej, 30-838 Krakow (PL); Oginski, Artur, 42-200 Czestochowa (PL)
(74) Representative: Prinz & Partner

(57) **Abstract**

The invention relates to a method of placing an airbag (12) in a protective sheath (14), comprising the following steps:
a) an airbag (12) and a protective sheet (14') are provided;
b) the airbag (12) is pre-folded;
c) the protective sheet (14') is laid around the pre-folded airbag (12); and
d) opposing free edges (18, 20) of the protective sheet (14') are connected with each other such that a tube-like protective sheath (14) is produced which surrounds the airbag (12);
the steps c) and d) being carried out in one working operation.

The invention further relates to a device (10) for carrying out this method.

## Description

The invention relates to a method of placing an airbag in a protective sheath as well as to a device for carrying out this method.

It is generally known to place airbags of vehicle occupant restraint systems in protective sheaths which, on the one hand, protect the airbag and, on the other hand, keep it in a compressed and folded state. The airbag together with the protective sheath is usually fastened to a gas generator and/or a housing, in order to constitute a pre-assembled airbag module. In order to allow the airbag to deploy in the desired manner, the protective sheath is provided in most cases with a predetermined breaking point or a tear seam, tearing open upon activation of the airbag module.

In prior art, in particular side airbags covering a vehicle side wall at least in portions in the deployed state, are often pre-folded in vehicular longitudinal direction in an accordion-like manner and are placed in a tube-like protective sheath.

DE 102 55 119 B3 discloses a method of placing such an airbag in an elongated encasement, with the pre-folded airbag firstly being inserted in a profile rail having a U-shaped cross-section; after this, the profile rail together with the airbag is inserted in a prefabricated, elongate tube encasement. This tube encasement finally is withdrawn from the profile rail together with the pre-folded airbag, so that the airbag is placed in the encasement as desired. As the encasing material at first is available as a one-ply band, it has to be prefabricated at first to a tube-like envelope. This separate work step as well as the subsequent introducing and withdrawing of the profile rail or the encasement in the longitudinal direction of the tube-like envelope make the described method labor-intensive and costly.

It is therefore the object of invention to provide a simplified method of placing an airbag in a protective sheath.

This object is achieved by a method according to the invention comprising the following steps:
a) an airbag and a protective sheet are provided;
b) the airbag is pre-folded;
c) the protective sheet is laid around the pre-folded airbag; and
d) opposing free edges of the protective sheet are connected with each other such that a tube-like protective sheath is produced which surrounds the airbag;
the steps c) and d) being carried out in one working operation.

As the protective sheet is laid around the pre-folded airbag almost simultaneously in one work step and is connected so as to form a protective sheath, preferably by sewing, the prefabrication of the protective sheath as well as the expensive insertion and extraction of the profile rail or protective sheath can be omitted. Accordingly, the method of placing the airbag in the protective sheath becomes more efficient on the whole and thus more cost-effective.

In a variant of the method the opposing free edges of the protective sheet are connected with each other, while the pre-folded airbag is separated from the protective sheet by a profile structural component. It is ensured thereby that the protective sheet is not inadvertently connected with portions of the pre-folded airbag and that the deployment of the airbag upon activation of the airbag module is not hindered.

In a further variant of the method the airbag has a longitudinal axis, and a connection device is preferably provided for connecting the opposing free edges of the protective sheet, the airbag together with the protective sheet being moved relative to the connection device in axial direction during the combined working operation of the steps c) and d). The airbag thus is placed in the protective sheath by a one-time, linear movement in axial direction, which sheath is fabricated from the protective sheet not before, but during this movement. A prefabrication of the protective sheath can be omitted accordingly, just as the axial introduction of a profile rail in the protective sheath and the subsequent axial extraction of the protective sheath (together with the airbag) from the profile rail.

The invention further includes a device for carrying out the described method, the device comprising a connection device for connecting the opposing free edges of the protective sheet, and a feeding device for feeding the protective sheet and the airbag, being inserted therein, to the connection device. After only a one-time run through the device according to the invention, the protective sheet and the airbag are processed so as to form a packet, which can be installed in the prefabricated form without any further working steps.

The feeding device preferably includes a profile structural component by means of which the protective sheet is positioned relative to the airbag. Such a profile structural component for positioning the protective sheet can be manufactured at low expenses, whereby a low-cost changeover from the conventional method to the new method of placing an airbag in the protective sheath will be made possible.

Special embodiments of the invention and the advantages thereof will be apparent from the sub-claims.

The invention will now be described by means of a preferred embodiment which is illustrated in the attached drawings and in which:
- Figure 1 shows the device according to the invention for carrying out the method according to the invention in a schematic top view;
- Figure 2 shows a profile structural component of the device according to the invention in a top view;
- Figure 3 shows the profile structural component according to Figure 2 in a perspective view; and
- Figure 4 shows an inner profile part of the profile structural component of Figure 3 in a perspective view.

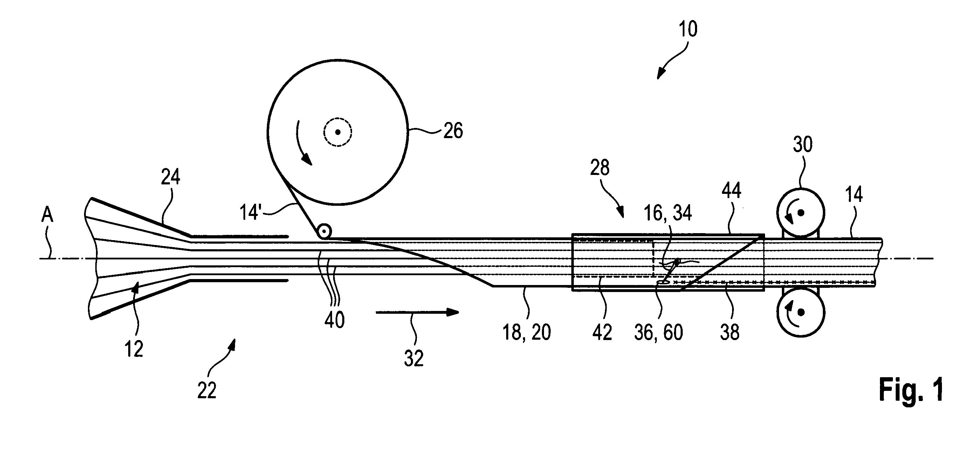

Figure 1 schematically depicts a device 10 with which a method of placing an airbag 12 in a protective sheath 14 can be carried out.

The device 10 comprises a connection device 16 for connecting opposing free edges 18, 20 of a protective sheet 14'. In this context, the one-ply, band-shaped material for the protection and fixation of the airbag 12 is termed protective sheet 14', as long as it is not yet connected along its opposing, free longitudinal edges. When the edges 18, 20 are connected, the material which now is tube-like, will be referred to as protective sheath 14.

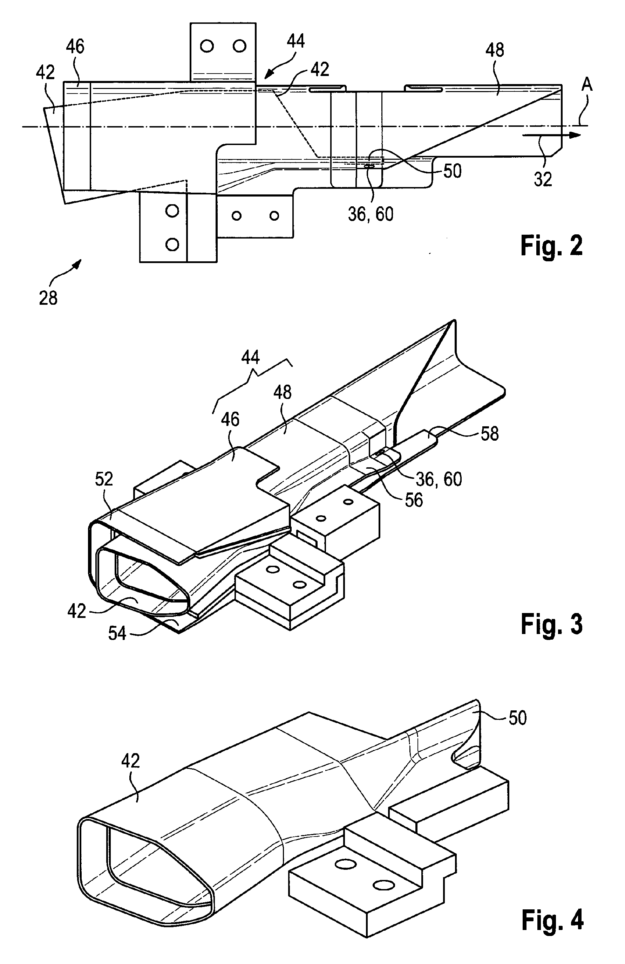

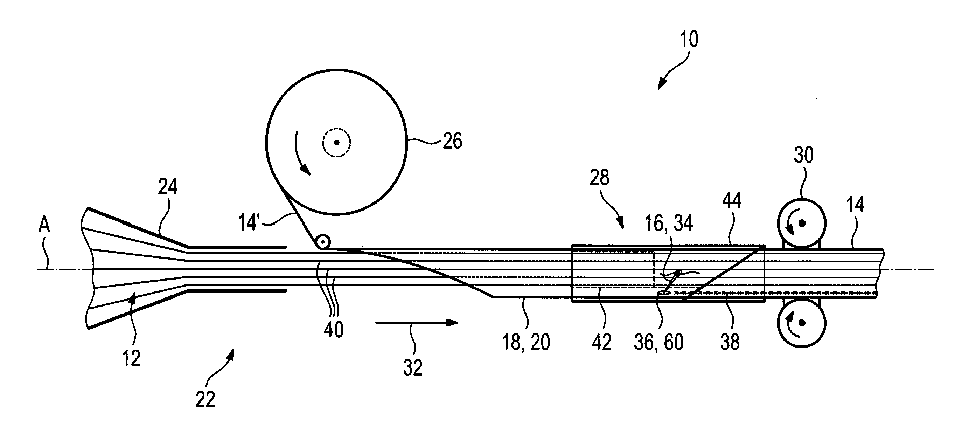

Apart from the connection device 16 the device 10 comprises a feeding device 22 for feeding the protective sheet 14' as well as the airbag 12 to the connection device 16. According to Figure 1, the feeding device 22 comprises a profile rail 24 which compresses the airbag 12, pre-folded in an accordion-like manner, into its desired and folded condition, a supply reel 26 which has the band-shaped protective sheet 14' wound thereon, a profile structural component 28 which will be explained in more detail in the description of Figures 2 to 4, and a drive 30 capable of moving the protective sheath 14 together with the airbag 12 along a longitudinal axis A. The driving direction of the protective sheath 14/protective sheet 14' and of the airbag 12 is indicated in Figure 1 by an arrow 32.

The connection device 16 is arranged in the region of the profile structural component 28. In the example embodiment which is illustrated, the connection device 16 is a sewing machine, which is indicated symbolically in Figure 1 by a needle 34. In alternative variants of the embodiment the connection device 16 may also be a gluing or welding device, for instance, gluing or welding the opposing free edges 18, 20 of the protective sheet 14' with each other.

The edges 18, 20 of the protective sheath 14 are connected with each other at a point of connection 36 by the connection device 16; in the present example they are sewn to each other, reference symbol 38 in Figure 1 giving an indication to a corresponding seam. In some variants of the embodiment this seam 38 is realized discontinuously, so that after placing the airbag 12 in the protective sheath 14 fastening tabs provided on the airbag 12 can be passed through the seam gaps, in order to fasten the airbag 12 to an airbag module part, for instance.

The device 10 as well as the method (which is described below) of placing the airbag 12 in the protective sheath 14 is particularly suited for side airbags which in the deployed state cover a vehicular side wall at least in part. Such airbags 12 have a longitudinal axis A in the vehicular longitudinal direction and are pre-folded in axial direction mostly in an accordion-like manner, with corresponding folds 40 being marked in Figure 1.

The profile structural component 28 as a central component of the feeding device 22 will be explained in more detail in the following by means of Figures 2 to 4. The profile structural component 28 has an inner profile element 42 and an outer profile element 44 surrounding the inner profile element 42, the pre-folded airbag 12 being guided in the inner profile element 42 and the protective sheet 14' being guided between the inner and outer profile elements 42, 44 (cf. Figures 3 and 4).

Figure 2 shows the top view of the profile structural component 28 from Figure 1 in detail. The outer profile element 44 is composed of two pieces 46, 48, this two-part configuration being essentially due to circumstances concerning production. Furthermore, the inner profile element 42 can be seen, which extends in the outer profile element 44, with the contour of the inner profile elements 42 within the outer profile elements 44 being partly indicated in broken line.

This contour of the inner profile elements 42, illustrated as a broken line, makes clear that the pre-folded airbag 12 is separated from the protective sheet 14' at the point of connection 36, at which the free edges 18, 20 of the protective sheet 14' are connected with each other, this separation being established by the inner profile element 42, more precisely by a flange-like protrusion 50 of the profile element 42. In this way, any inadvertent connecting, in particular sewing the protective sheet 14' with the airbag 12 is excluded, and a desired deployment of the airbag in the case of activation will be ensured.

Figure 3 shows a perspective view of the profile structural component 28, the outer profile element 44 having an open cross-section. A first part 46 of the outer profile element 44 has an essentially U-shaped cross-section with two legs 52, 54. By means of this U-shaped cross-section, the protective sheet 14' is laid around the pre-folded airbag 12, to be more precise, around the inner profile element 42 in which the pre-folded airbag 12 is guided. In this process, the free longitudinal edges 18, 20 are situated in the region of the free ends of the legs 52, 54. As seen as in the driving direction 32 of the protective sheet 14' or the airbag 12, the distance between the legs 52, 54 decreases, so that the free edges 18, 20 of the protective sheet 14' are moved towards each other.

A second part 48 of the outer profile element 44 has an open box-type cross-section with two end flanges 56, 58. The free edges 18, 20 of the protective sheet 14' are guided via the legs 52, 54 of the first part 46 between the end flanges 56, 58 of the second part 48 of the outer profile element 44. For sewing the edges 18, 20, an opening 60 for the needle 34 of a sewing machine (cf. Figure 1) is provided in the end flanges 56, 58. The opening 60 generally represents the point of connection 36 at which the edges 18, 20 of the protective sheet 14' are connected with each other, so that the tube-shaped protective sheath 14 will be produced.

Subsequently, the protective sheath 14 together with airbag 12 accommodated therein leaves the profile structural component 28.

Figure 4 shows only the inner profile element 44 of the profile structural component 28 in a perspective view. In this illustration the flange-like protrusion 50 can be seen particularly well, separating the airbag 12 from the protective sheet 14 at the point of connection 36' (cf. Figure 1).

Relating to the driving direction 32 of the airbag 12 the drive 30 is provided according to Figure 1 behind the profile structural component 28, this drive moving the protective sheath 14/protective sheet 14' together with the pre-folded airbag 12 in axial direction through the feeding device 22. As the connection device 16 is firmly connected with the feeding device 22, the airbag 12 together with the protective sheet 14' or protective sheath 14 will move also relative to the connection device 16 in axial direction.

In this process, the drive 30 feeds the protective sheet 14' via the feeding device 22 to the connection device 16 (together with the airbag 12) in such a manner that the connection device 16 can connect the free edges 18, 20 in the desired way. If the edges 18, 20 are being sewn, a continual supply is of advantage, whereas in the case of gluing or welding the edges 18, 20 a discontinued, stepwise supply would be conceivable.

All in all, the drive 30, the feeding device 22 and the connection device 16 are connected with each other in such a manner that, on the one hand, they constitute a structural unit, but on the other hand they are adapted to each other such that they constitute a functional unit.

The method of placing the airbag 12 in the protective sheath 14 may thus be summarized as follows: At first a pre-folded airbag as well as a protective sheet 14' are provided, the pre-folded airbag being fed to the profile structural component 28 by the profile rail 24 and the protective sheet 14' being fed to the same through the supply reel 26. By means of the profile structural component 28 the protective sheet 14' is laid around the pre-folded airbag 12. In the same working operation the opposing free edges 18, 20 of the protective sheet 14' are connected with each other such that the tube-like protective sheath 14 is produced which surrounds the airbag. The term "in the same working operation" means here that both the airbag 12 and the protective sheet 14' merely perform a combined movement in axial direction, in order to place the airbag 12 in the protective sheath 14. Thereby the method can be carried out with low manual amount of work; this is why it is particularly efficient and inexpensive. For avoiding an undesired connection between the airbag 12 and the protective sheath 14, the airbag 12 is separated from the protective sheet 14' or protective sheath 14 during the manufacture of the connection between the edges 18, 20 of the protective sheet 14' preferably by the profile structural component 28.

## Claims

1. A method of placing an airbag (12) in a protective sheath (14), comprising the following steps:
a) an airbag (12) and a protective sheet (14') are provided;
b) the airbag (12) is pre-folded;
c) the protective sheet (14') is laid around the pre-folded airbag (12); and
d) opposing free edges (18, 20) of the protective sheet (14') are connected with each other such that a tube-like protective sheath (14) is produced which surrounds the airbag (12);
the steps c) and d) being carried out in one working operation.

2. The method according to claim 1, **characterized in that** the opposing free edges (18, 20) of the protective sheet (14') are sewn in step d).

3. The method according to claim 1 or 2, **characterized in that** the opposing free edges (18, 20) of the protective sheet (14') are connected while the pre-folded airbag (12) is separated from the protective sheet (14') by a profile structural component (28).

4. The method according to any of the preceding claims, **characterized in that** the pre-folded airbag (12) has a longitudinal axis (A) and a connection device (16) is provided for connecting the opposing free edges (18, 20) of the protective sheet (14'), the airbag (12) together with the protective sheet (14') being moved relative to the connection device (16) in an axial direction during the combined working operation of the steps c) and d).

5. A device for carrying out the method according to any of the preceding claims, **characterized by**
a connection device (16) for connecting the opposing free edges (18, 20) of the protective sheet (14'), and
a feeding device (22) for feeding the protective sheet (14') and the airbag (12), being inserted therein, to the connection device (16).

6. The device according to claim 5, **characterized in that** the connection device (16) is a sewing machine.

7. The device according to claim 5 or 6, **characterized in that** the feeding device (22) includes a profile structural component (28) by means of which the protective sheet (14') is positioned relative to the airbag (12).

8. The device according to claim 7, **characterized in that** the profile structural component (28) has an inner profile element (42) and an outer profile element (44) surrounding the inner profile element (42), the pre-folded airbag (12) being guided in the inner profile element (42) and the protective sheet (14') being guided between the inner and outer profile elements (42, 44).

9. The device according to claim 8, **characterized in that** the inner profile element (42) has a closed cross-section and the outer profile element (44) has an open cross-section.

10. The device according to any of the preceding claims, **characterized in that** the connection device (16) and the feeding device (22) form a structural unit and are functionally adapted to each other.
